# EUROPÄISCHE PATENTSCHRIFT

(11) **EP 1 733 607 B1**
(45) Veröffentlichungstag und Bekanntmachung des Hinweises auf die Patenterteilung: **23.07.2008**
(21) Anmeldenummer: 06006360.9
(22) Anmeldetag: 28.03.2006
(51) Int. Cl.: A01D 61/00

(54) **Schrägförderer für Mähdrescher**
Elevator conveyor for a combine
Convoyeur-élévateur pour moissonneuse-batteuse

(30) Priorität: 15.06.2005 DE 102005027841
(43) Veröffentlichungstag der Anmeldung: 20.12.2006
(73) Patentinhaber: CLAAS Selbstfahrende Erntemaschinen GmbH, 33428 Harsewinkel (DE)
(72) Erfinder: Fögeling, Walter, 33442 Herzebrock-Clarholz (DE); Speckamp, Dirk, 59073 Hamm (DE)

(56) Entgegenhaltungen:
- DE-A1- 4 132 246
- FR-A- 2 525 429
- US-A- 3 555 790
- US-A- 4 209 024

## Beschreibung

Die Erfindung betrifft einen Mähdrescher nach dem Oberbegriff des Anspruchs 1.

In der DE 41 32 246 ist ein Förderer mit einem endlosen Zugmittel, das über Räder umgelenkt wird offenbart. Der Förderer ist in einem Einzugsgehäuse angeordnet, das zusammen mit dem Förderer den Schrägförderer eines Mähdreschers bildet. Der Schrägförderer fördert das von einem Schneidwerk aufgenommene Erntegut unterschlächtig zu einer Dreschvorrichtung.

Nachteilig bei diesem bekannten Schrägförderer ist, dass der Schrägförderer das Erntegut mit einer geringen Geschwindigkeit fördert und der Dreschtrommel zuführt. Die relativ hohe Differenz der Geschwindigkeit des Schrägförderers verglichen mit der Geschwindigkeit der Dreschvorrichtung begrenzt die Durchsatzleistung des Mähdreschers.

Aus der US 4,209,024 ist ein Mähdrescher mit einem Schrägförderer bekannt, wobei der Förderer aus einem endlosen Zugmittel besteht, welches über Räder umgelenkt wird und das Erntegut unterschlächtig fördert. Zwischen dem Förderer und einem Dreschwerk ist eine zusätzliche Walze angeordnet, welche eine höhere Drehzahl als das Zugmittel aufweist und somit das Erntegut beschleunigt einer nachgeordneten Drescheinrichtung zuführt. Nachteilig an dem bekannten Mähdrescher ist es, dass zur Beschleunigung des Erntegutes eine zusätzliche Walze erforderlich ist, welche einen separaten Antrieb und einen entsprechenden Bauraum bedingt.

Der Erfindung liegt daher die Aufgabe zugrunde die Nachteile des Standes der Technik zu vermeiden und insbesondere einen Mähdrescher mit einem Schrägförderer zu schaffen, der das Erntegut beschleunigt und der Dreschvorrichtung dünnschichtig und gleichmäßig zuführt.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Indem die Zugmittelführung als Beschleunigungsorgan ausgeführt ist, wird auf konstruktiv einfache sichergestellt, dass das Erntegut vor dem Eintritt in die Dreschvorrichtung vorbeschleunigt wird.

Eine einfache, platzsparende Ausführung ergibt sich, wenn das Zugmittel über wenigstens eine untere Zugmittelführung und über wenigstens eine obere Zugmittelführung umgelenkt wird.

Damit das Erntegut über den Boden des Kanalgehäuses gefördert werden kann, weist der Schrägförderer ein Kanalgehäuse auf und das Zugmittel und die Zugmittelführung sind innerhalb des Kanalgehäuses angeordnet.

Vorteilhafterweise sind die Zugmittel als Ketten ausgeführt und die obere Zugmittelführung weist eine Antriebswelle auf, auf die im Bereich der Ketten Kettenräder fest aufgesetzt sind, so dass die Antriebswelle die Zugmittel formschlüssig und damit schlupffrei antreibt.

In vorteilhafter Weiterbildung der Erfindung ist der Schrägförderer um eine Drehachse schwenkbar und die Antriebswelle der oberen Zugmittelführung ist um die Drehachse drehbar im Kanalgehäuse gelagert, so dass sich die Lage der oberen Zugmittelführung relativ zur Dreschvorrichtung beim Schwenken des Schrägförderers nicht ändert.

Damit das Erntegut nach außen abgelenkt wird und in einem größeren Abstand von der Drehachse der oberen Zugmittelführung um die obere Zugmittelführung geführt wird, weist die obere Zugmittelführung im Bereich zwischen den Kettenrädern eine Trommel auf, deren Durchmesser größer als der äußere Durchmesser der Kettenräder ist.

Dadurch, dass die Trommel der oberen Zugmittelführung auf ihrem Umfang sich in Längsrichtung der Trommel erstreckende Nuten aufweist, laufen die Mitnehmer an den Ketten ungehindert um die obere Zugmittelführung.

Um das von der Trommel nach außen abgelenkte Erntegut zu beschleunigen, sind auf dem Umfang der Trommel Stifte und/oder Leisten angeordnet, deren kreisförmige, äußere Bewegungsbahn im Durchmesser größer als der äußere Durchmesser der Trommel ist.

In vorteilhafter Weiterbildung der Erfindung sind mehrere Mitnehmerleisten mit gleichmäßiger Teilung an den Ketten angeordnet, wobei die Teilung der Mitnehmerleisten mit der Teilung der Nuten an der Trommel übereinstimmt, so dass die Mitnehmerleisten beim Umlauf der Ketten in die Nuten der Trommel ein- und auslaufen.

In einer zweiten erfindungsgemäßen Ausführung ist die Trommel exzentrisch auf der Antriebswelle der oberen Zugmittelführung angeordnet, so dass das Erntegut periodisch nach außen abgelenkt wird.

In einer dritten erfindungsgemäßen Ausführung ist innerhalb der Trommel eine Kurbelwelle angeordnet, auf der mehrere Zinken drehbar gelagert sind, wobei die Zinken beim Drehen der Trommel durch Durchlässe in der Trommel ein- und austreten, so dass die Gefahr des Wickelns des Emtegutes um die Zugmittelführung vermindert wird.

Das Zugmittel weist ein Untertrum auf, wobei die Zinken unterhalb des Untertrums beginnen, aus der Trommel herauszutreten, damit die Zinken die von den Mitnehmerleisten zugeführte Entegutmasse nicht zerreißen.

Weitere vorteilhafte Ausgestaltungen sind Gegenstand weiterer Unteransprüche und werden nachfolgend an Hand des in mehrerer Figuren dargestellten Ausführungsbeispiels näher erläutert.
Es zeigen:
- Fig.1: eine Seitenansicht eines selbstfahrenden Mähdreschers,
- Fig.2: eine vergrößerte Seitenansicht eines erfindungsgemäßen Schrägförderers
- Fig.3: eine perspektivische Ansicht eines erfindungsgemäßen Schrägförderers,
- Fig.4: zeigt einen Schnitt durch die Trommel der oberen Zugmittelführung einer weiteren Ausführung eines erfindungsgemäßen Schrägförderers.

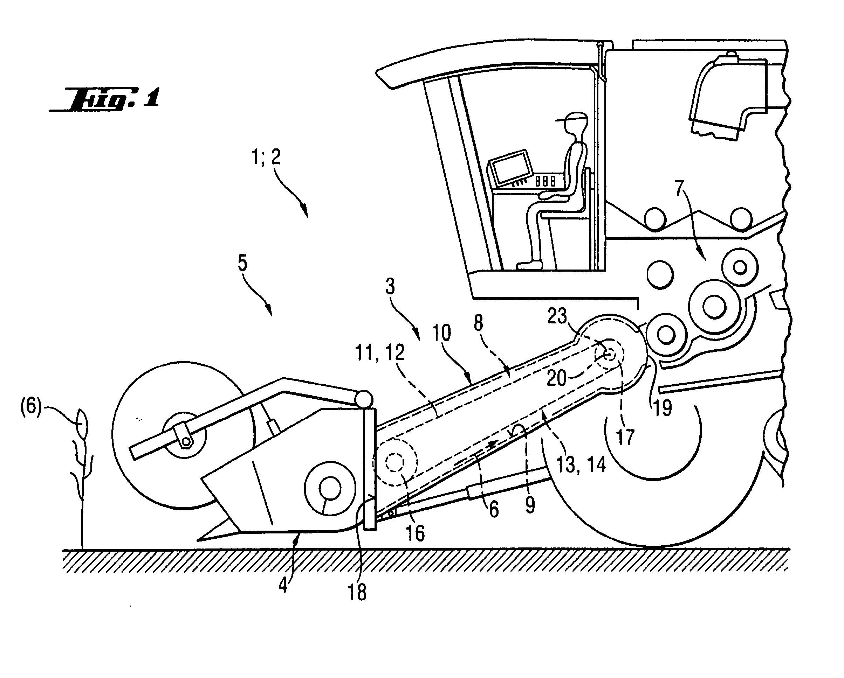

In Fig. 1 ist eine als selbstfahrender Mähdrescher 1 ausgeführte landwirtschaftliche Erntemaschine 2 in der Seitenansicht dargestellt, an deren Schrägförderer 3 ein als Schneidwerk 4 ausgeführtes Vorsatzgerät 5 angeordnet ist. Der Schrägförderer 3 fördert das von dem Schneidwerk 4 abgeschnittene Erntegut 6 weiter zu einer Dreschvorrichtung 7. Der Schrägförderer 3 besteht aus einem Zuführorgan 8, das in einem Kanalgehäuse 10 angeordnet ist.

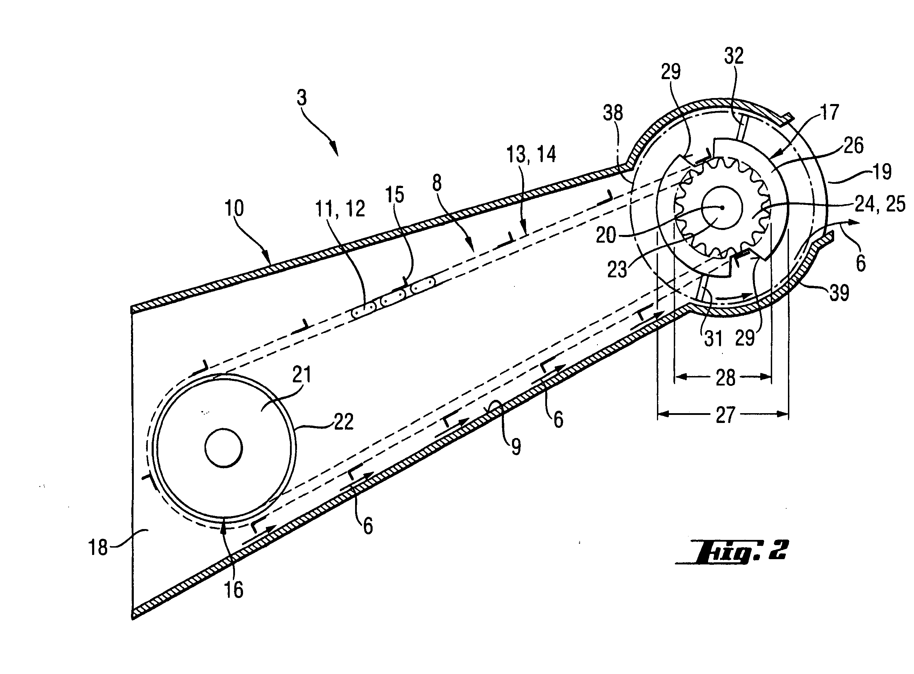

Fig. 2 zeigt eine vergrößerte Seitenansicht des erfindungsgemäßen Schrägförderers 3. Das Zuführorgan 8 weist zwei als endlose Ketten 11, 12 ausgeführte Zugmittel 13, 14 auf, die über Mitnehmerleisten 15 miteinander verbunden sind. Die ketten 11, 12 werden über eine untere Zugmittelführung 16 und eine obere Zugmittelführung 17 umgelenkt, wobei die untere Zugmittelführung 16 im Bereich der dem Schneidwerk 4 zugewandten Annahmeöffnung 18 des Kanalgehäuses 10 und die obere Zugmittelführung 17 im Bereich der der Dreschvorrichtung 7 zugewandten Abgabeöffnung 19 des Kanalgehäuses 10 drehbar gelagert sind. Die Mitnehmerleisten 15 schieben das an der Annahmeöffnung 18 erfasste Erntegut 6 über den Boden 9 des Kanalgehäuses 10 bis zur Abgabeöffnung 19.
Der Schrägförderer 3 ist um die Drehachse 20 der oberen Zugmittelführung 17 höhenverschwenkbar.

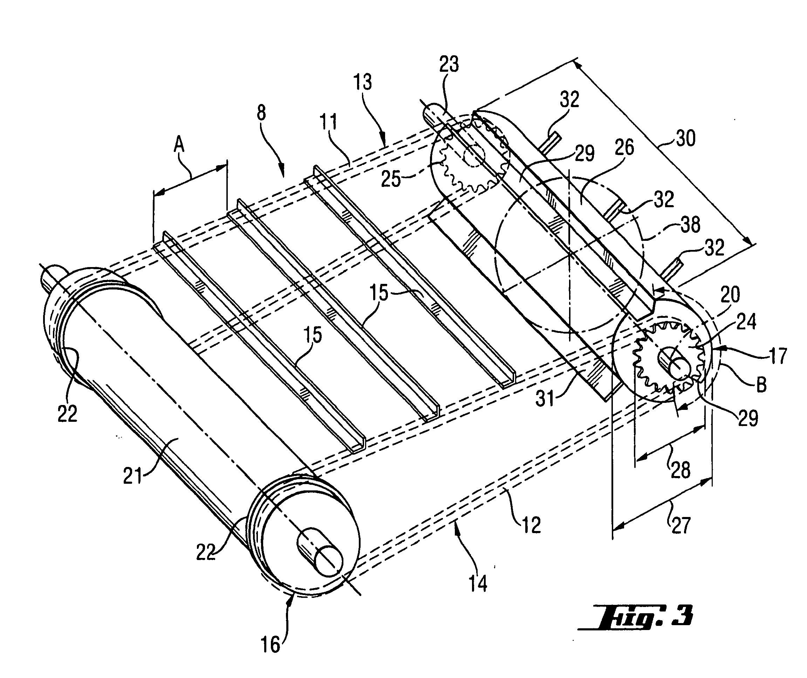

In Fig. 3 ist eine perspektivische Ansicht des erfindungsgemäßen Schrägförderers 3 dargestellt. Die untere Zugmittelführung 16 weist eine Trommel 21 auf, auf deren Mantel in einem Abstand Flansche 22 angeordnet sind. Die Ketten 11, 12 liegen auf den Flanschen 22 auf und umschlingen diese.
Die obere Zugmittelführung 17 besteht aus einer Antriebswelle 23, auf die im Bereich der Ketten 11, 12 Kettenräder 24, 25 fest aufgesetzt sind. Jede Förderkette 11, 12 umschlingt ein Kettenrad 24, 25 und greift dabei in die Verzahnung des Kettenrades 24, 25 ein, so dass sich eine formschlüssige Wirkverbindung ergibt. Um die obere Zugmittelführung 17 erfindungsgemäß als Beschleunigungsorgan auszubilden ist zwischen den Kettenrädern 24, 25 eine Trommel 26 auf der Antriebswelle 23 angeordnet, deren äußerer Durchmesser 27 größer als der äußere Durchmesser 28 der Kettenräder 25, 26 ist. Die Trommel 26 lenkt das Erntegut 6 nach außen ab, so das es weiter entfernt um die Drehachse 20 der oberen Zugmittelführung 17 herum gefördert wird.
Um das von der Trommel 26 abgelenkte Erntegut 6 zu beschleunigen, sind auf dem Mantel der erfindungsgemäßen Trommel 26 Leisten 31 und/oder Stifte 32 angeordnet, deren kreisförmige, äußere Bewegungsbahn 38 im Durchmesser größer als der äußere Durchmesser 27 der Trommel 26 ist. Die Beschleunigung des Erntegutes 6 beruht darauf, das die Umfangsgeschwindigkeit der Leisten 31 und Stifte 32 und damit auch des Emtegutes 6 mit wachsendem Abstand zur Drehachse 20 zunimmt.
Das Erntegut 6 wird auf einer Kreisbahn zwischen der Trommel 26 und einem an die äußere Bewegungsbahn 38 der Stifte 32 oder Leisten 31 angepasstes, kreisbogenförmiges Bodenelement 39 des Kanalgehäuses 10 hindurchgefördert (siehe Fig.2).

Durch die erhöhte Geschwindigkeit des Erntegutes 6 wird das Erntegut 6 der Dreschvorrichtung 7 dünnschichtig und gleichmäßig zuführt, wodurch die Dresch-und Abscheideleistung der Dreschvorrichtung 7 erhöht wird.

Damit die Mitnehmerleisten 15 beim Umlauf der Ketten 11, 12 nicht mit der Trommel 26 der oberen Zugmittelführung 17 kollidieren, weist die Trommel 26 in Längsrichtung Nuten 29 auf, die sich über die Breite 30 der Trommel 26 erstrecken und in die die Mitnehmer 15 beim Umlauf der Ketten 11, 12 ein- und auslaufen. Hierzu müssen die Mitnehmerleisten 15 mit gleichmäßiger Teilung A an den Ketten 11, 12 befestigt sein, wobei die Teilung A mit der Teilung B der Nuten 29 an der Trommel 26 übereinstimmen muss.

Es ist eine Ausführung des erfindungsgemäßen Schrägförderers 3 denkbar, bei der die Trommel 26 exzentrisch auf der Antriebswelle 23 gelagert ist. Das Erntegut 6 wird in diesem Fall periodisch durch die exzentrisch rotierende Trommel 26 nach außen abgelenkt.

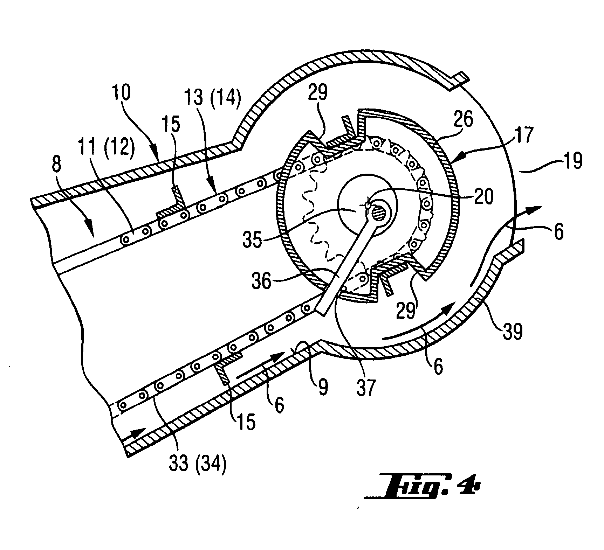

Fig. 4 zeigt den Schnitt durch die Trommel 26 der oberen Zugmittelführung 17 einer weiteren Ausführung eines erfindungsgemäßen Schrägförderers 3. Innerhalb der als Hohlkörper ausgeführten Trommel 26 ist eine Kurbelwelle 35 gelagert, die um die Drehachse 20 der Trommel 26 relativ zur Trommel 26 verdrehbar ist. Auf der Kurbelwelle sind mehrere Zinken 36 drehbar gelagert, die durch Durchlässe 37 in der Trommel 26 nach außen ragen. Beim Drehen der oberen Zugmittelführung 17 ergibt sich bei stillstehender Kurbelwelle 35 eine Relativbewegung zwischen den Zinken 36 und der Trommel 26, bei der die Zinken 36 periodisch durch die Durchlässe 37 hervortreten und in diese eintauchen. Die Lage der Kurbelwelle 35 zur Trommel 26 ist derart gewählt, das die Zinken 36 bei Drehung entgegen dem Uhrzeigersinn im Bereich unterhalb der Untertrums 33, 34 beginnen aus der Trommel 26 hervorzutreten und in das Erntegut 6 eingreifen. Damit wird verhindert, dass die von den Mitnehmern 15 zugeführte zusammenhängende Emtegutmatte nicht aufgebrochen wird.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Mähdrescher
- 2: Landwirtschaftliche Erntemaschine
- 3: Schrägförderer
- 4: Schneidwerk
- 5: Vorsatzgerät
- 6: Erntegut
- 7: Dreschvorrichtung
- 8: Zuführorgan
- 9: Boden
- 10: Kanalgehäuse
- 11: Ketten
- 12: Ketten
- 13: Zugmittel
- 14: Zugmittel
- 15: Mitnehmerleiste
- 16: untere Zugmittelführung
- 17: obere Zugmittelführung
- 18: Annahmeöffnung
- 19: Abgabeöffnung
- 20: Drehachse
- 21: Trommel
- 22: Flansche
- 23: Antriebswelle
- 24: Kettenrad
- 25: Kettenrad
- 26: Trommel
- 27: Durchmesser
- 28: Durchmesser
- 29: Nut
- 30: Breite
- 31: Leisten
- 32: Stifte
- 33: Untertrum
- 34: Untertrum
- 35: Kurbelwelle
- 36: Zinken
- 37: Durchlässe
- 38: Bewegungsbahn
- 39: Bodenelement
- A: Teilung
- B: Teilung

## Patentansprüche

1. Mähdrescher (1) mit einem Schrägförderer (3) mit wenigstens einem Zugmittel (13,14), das über wenigstens eine Zugmittelführung (16, 17) umgelenkt wird,
**dadurch gekennzeichnet,**
**dass** die Zugmittelführung (16, 17) als Beschleunigungsorgan ausgebildet ist.

2. Mähdrescher nach Anspruch 1,
**dadurch gekennzeichnet,**
**dass** das Zugmittel (13, 14) über wenigstens eine untere Zugmittelführung (16) und über wenigstens eine obere Zugmittelführung (17) umgelenkt wird.

3. Mähdrescher nach wenigstens einem der vorhergehenden Ansprüche,
**dadurch gekennzeichnet,**
**dass** der Schrägförderer (3) ein Kanalgehäuse (10) aufweist und das Zugmittel (13, 14) und die Zugmittelführung (16, 17) innerhalb des Kanalgehäuses (10) angeordnet sind.

4. Mähdrescher nach wenigstens einem der vorhergehenden Ansprüche,
**dadurch gekennzeichnet,**
**dass** der Schrägförderer (3) um eine Drehachse (20) verschwenkbar ist, wobei die Antriebswelle (23) der oberen Zugmittelführung (17) in der Drehachse (20) drehbar am Kanalgehäuse (10) gelagert ist.

5. Mähdrescher nach wenigstens einem der vorhergehenden Ansprüche,
**dadurch gekennzeichnet,**
**dass** die Zugmittel (13, 14) als Ketten (11, 12) ausgeführt sind und die obere Zugmittelführung (17) eine Antriebswelle (23) aufweist, auf die im Bereich der Ketten (11, 12) Kettenräder (24, 25) fest aufgesetzt sind.

6. Mähdrescher nach wenigstens einem der vorhergehenden Ansprüche,
**dadurch gekennzeichnet,**
**dass** die obere Zugmittetführung (17) im Bereich zwischen den Kettenrädern (24, 25) eine Trommel (26) aufweist, deren äußerer Durchmesser (27) größer als der äußere Durchmesser (28) der Kettenräder (24, 25) ist.

7. Mähdrescher nach wenigstens einem der vorhergehenden Ansprüche,
**dadurch gekennzeichnet,**
**dass** die Trommel (26) der oberen Zugmittelführung (17) auf ihrem äußeren Umfang sich in Längsrichtung über die Breite 30 der Trommel (26) erstreckende Nuten (29) aufweist.

8. Mähdrescher nach wenigstens einem der vorhergehenden Ansprüche,
**dadurch gekennzeichnet,**
**dass** auf dem Umfang der Trommel (26) Stifte (32) und/oder Leisten (31) angeordnet sind, deren kreisförmige, äußere Bewegungsbahn (38) im Durchmesser größer als der äußere Durchmesser (27) der Trommel (26) ist.

9. Mähdrescher nach wenigstens einem der vorhergehenden Ansprüche,
**dadurch gekennzeichnet,**
**dass** mehrere Mitnehmerleisten (15) mit gleichmäßiger Teilung (A) an den Ketten (11, 12) angeordnet sind, wobei die Teilung (A) der Mitnehmerleisten (15) mit der Teilung (B) der Nuten (29) an der Trommel (26) übereinstimmt.

10. Mähdrescher nach wenigstens einem der vorhergehenden Ansprüche,
**dadurch gekennzeichnet,**
**dass** die Trommel (26) exzentrisch auf der Antriebswelle (23) der oberen Zugmittelführung (17) angeordnet ist.

11. Mähdrescher nach wenigstens einem der vorhergehenden Ansprüche,
**dadurch gekennzeichnet,**
**dass** innerhalb der Trommel (26) eine Kurbelwelle (35) angeordnet ist, auf der mehrere Zinken (36) drehbar gelagert sind, wobei die Zinken (36) beim Drehen der Trommel (26) durch Durchlässe (37) in der Trommel (26) ein- und austreten.

12. Mähdrescher nach wenigstens einem der vorhergehenden Ansprüche,
**dadurch gekennzeichnet,**
**dass** das Zugmittel (11, 12) ein Untertrum (33, 34) aufweist, wobei die Zinken (36) unterhalb des Untertrums (33, 34) beginnen, aus der Trommel (26) hervorzutreten.

## Claims

1. A combine harvester (1) having an elevator conveyor (2) with at least one pulling means (13, 14) which is changed in direction by way of at least one pulling means guide (16, 17),
**characterised in that**
the pulling means guide (16, 17) is in the form of an acceleration member.

2. A combine harvester according to claim 1 **characterised in that** the pulling means (13, 14) is changed in direction by way of at least one lower pulling means guide (16) and by way of at least one upper pulling means guide (17).

3. A combine harvester according to at least one of the preceding claims **characterised in that** the elevator conveyor (3) has a passage housing (10) and the pulling means (13, 14) and the pulling means guide (16, 17) are arranged within the passage housing (10).

4. A combine harvester according to at least one of the preceding claims **characterised in that** the elevator conveyor (13) is pivotable about an axis of rotation (20), wherein the drive shaft (23) of the upper pulling means guide (17) is mounted rotatably on the axis of rotation (20) on the passage housing (10).

5. A combine harvester according to at least one of the preceding claims **characterised in that** the pulling means (13, 14) are in the form of chains (11, 12) and the upper pulling means guide (17) has a drive shaft (23) to which chain wheels (24, 25) are fixedly fitted in the region of the chains (11, 12).

6. A combine harvester according to at least one of the preceding claims **characterised in that** in the region between the chain wheels (24, 25) the upper pulling means guide (17) has a drum (26), the outer diameter (27) of which is larger than the outer diameter (28) of the chain wheels (24, 25).

7. A combine harvester according to at least one of the preceding claims **characterised in that** the drum (26) of the upper pulling means guide (17), on its outer periphery, has grooves (29) extending in the longitudinal direction over the width (30) of the drum (26).

8. A combine harvester according to at least one of the preceding claims **characterised in that** arranged on the periphery of the drum (26) are pins (32) and/or bars (31), the circular outer path of movement (38) of which is of a larger diameter than the outer diameter (26) of the drum (26).

9. A combine harvester according to at least one of the preceding claims **characterised in that** a plurality of entrainment bars (15) are arranged at a uniform pitch (A) on the chains (11, 12), the pitch (A) of the entrainment bars (15) being the same as the pitch (B) of the grooves (29) on the drum (26).

10. A combine harvester according to at least one of the preceding claims **characterised in that** the drum (26) is arranged eccentrically on the drive shaft (23) of the upper pulling means guide (17).

11. A combine harvester according to at least one of the preceding claims **characterised in that** arranged within the drum (26) is a crankshaft (35), on which a plurality of tines (36) are rotatably mounted, wherein the tines (36) pass in and out through passages (37) in the drum (26) when the drum (26) rotates.

12. A combine harvester according to at least one of the preceding claims **characterised in that** the pulling means (11, 12) has a lower run (33, 34), wherein the tines (36) begin to project from the drum (26) beneath the lower run (33, 34).

## Revendications

1. Moissonneuse - batteuse (1) avec un convoyeur élévateur (3) avec au moins un moyen de traction (13, 14) qui est renvoyé par l'intermédiaire d'au moins un guidage de moyen de traction (16, 17), **caractérisée en ce que** le guidage de moyen de traction (16, 17) est configuré comme un organe d'accélération.

2. Moissonneuse - batteuse selon la revendication 1, **caractérisée en ce que** le moyen de traction (13, 14) est renvoyé par l'intermédiaire d'au moins un guidage de moyen de traction inférieur (16) et par l'intermédiaire d'au moins un guidage de moyen de traction supérieur (17).

3. Moissonneuse - batteuse selon l'une des revendications précédentes, **caractérisée en ce que** le convoyeur élévateur (3) présente un logement en forme de canal (10) et le moyen de traction (13, 14) et le guidage de moyen de traction (16, 17) sont disposés à l'intérieur du logement en forme de canal (10).

4. Moissonneuse - batteuse selon l'une des revendications précédentes, **caractérisée en ce que** le convoyeur élévateur (3) peut basculer autour d'un axe de rotation (20), l'arbre d'entraînement (23) du guidage de moyen de traction supérieur (17) étant monté dans l'axe de rotation (20) de manière à tourner sur le logement en forme de canal (10).

5. Moissonneuse - batteuse selon l'une des revendications précédentes, **caractérisée en ce que** les moyens de traction (13, 14) sont configurés comme des chaînes (11, 12) et le guidage de moyen de traction supérieur (17) présente un arbre d'entraînement (23) sur lequel des roues à chaîne sont montées de manière fixe dans la région des chaînes (11, 12).

6. Moissonneuse - batteuse selon l'une des revendications précédentes, **caractérisée en ce que** le guidage de moyen de traction supérieur (17) présente dans la région entre les roues à chaîne (24, 25) un tambour (26) dont le diamètre extérieur (27) est plus grand que le diamètre extérieur (28) des roues à chaîne (24, 25).

7. Moissonneuse - batteuse selon l'une des revendications précédentes, **caractérisée en ce que** le tambour (26) du guidage de moyen de traction supérieur (17) présente sur son pourtour extérieur des rainures (29) s'étendant dans la direction longitudinale sur la largeur (30) du tambour (26).

8. Moissonneuse - batteuse selon l'une des revendications précédentes, **caractérisée en ce que** sur le pourtour du tambour (26) sont disposés des tiges (32) et / ou des barres (31) dont la trajectoire de déplacement extérieure (38) a un diamètre plus grand que le diamètre extérieur (27) du tambour (26).

9. Moissonneuse - batteuse selon l'une des revendications précédentes, **caractérisée en ce que** plusieurs barrettes d'entraînement (15) sont disposés sur les chaînes (11, 12) avec un écartement uniforme (A), l'écartement (A) des barrettes d'entraînement (15) concordant avec l'écartement (B) des rainures (29) sur le tambour (26).

10. Moissonneuse - batteuse selon l'une des revendications précédentes, **caractérisée en ce que** le tambour (26) est disposé de manière excentrée sur l'arbre d'entraînement (23) du guidage de moyen de traction supérieur (17).

11. Moissonneuse - batteuse selon l'une des revendications précédentes, **caractérisée en ce qu'**à l'intérieur du tambour (26) est disposé un vilebrequin (35) sur lequel sont montées de manière rotative plusieurs dents (36), les dents (36) entrant dans le tambour et en sortant par des passages (37) lors de la rotation du tambour (26).

12. Moissonneuse - batteuse selon l'une des revendications précédentes, **caractérisée en ce que** le moyen de traction (11, 12) présente un brin inférieur (33, 34), les dents (36) commençant à sortir du tambour (26) en dessous du brin inférieur (33, 34).
